# EUROPEAN PATENT APPLICATION

(11) **EP 4 538 930 A1**
(43) Date of publication of application: **16.04.2025**
(21) Application number: 23214225.7
(22) Date of filing: 05.12.2023
(51) Int. Cl.: G06N 3/044, G06N 3/0464, G06N 3/047, G06N 3/0475, G06N 3/088, G06N 3/0895, G06N 3/09, G06N 3/092, G06N 3/098

(54) **METHOD AND APPARATUS FOR FEDERATED LEARNING**

(30) Priority: 12.10.2023 GR 20230100845
(71) Applicant: Samsung Electronics Co., Ltd., Suwon-si, Gyeonggi-do 16677 (KR)
(72) Inventor: LI, Rui, Chertsey, KT16 0RS (GB); VENIERIS, Stylianos, Chertsey, KT16 0RS (GB); KWON, Young D., Chertsey, KT16 0RS (GB); FERNANDEZ-MARQUES, Javier, Chertsey, KT16 0RS (GB); MISHCHENKO, Konstantin, Chertsey, KT16 0RS (GB); KOURIS, Alexandros, Chertsey, KT16 0RS (GB)
(74) Representative: Appleyard Lees IP LLP

(57) **Abstract**

Broadly speaking, embodiments of the present techniques provide a method for performing federated learning on progressively available data, which is suitable for implementation by resource-constrained devices, such as smartphones and edge devices.

## Description

### Field

The present application generally relates to a method and apparatus for federated learning. In particular, the present application provides a federated learning process which is suitable for implementation using resource-constrained devices, such as smartphones and edge devices.

### Background

Federated Learning (FL) has become a popular area of research in recent years thanks to its privacy-preserving nature and capability to utilise the compute power of millions of user devices for the training of ML models. Federated learning is a well-established machine learning technique in which a global ML model - usually stored on a server - is trained via multiple independent training sessions executed by local or client devices using those devices' own datasets. Each local/client device is supplied with a copy or version of the global ML model for local training. Each client device transmits updated parameters of the locally-trained model to the server for aggregation. The updated parameters may be weights and/or biases of the ML model (or of a neural network thereof). Federated learning involves multiple rounds or iterations of local training and aggregation. To ensure good performance of a final, global ML model, federated learning relies on an iterative process, where each interaction between a client device and server is known as a federated learning round. Each round or iteration involves transmitting the current global model to client devices, performing local training of the model on these client devices to produce a set of potential model updates at each client device, and then aggregating and processing these local updates into a single global update and applying it to the global model. When deployed across mobile devices in the wild, FL is primarily challenged by two issues. Firstly, there is the issue of system heterogeneity of the client devices, which can span from top-tier smartphones to low-end smartphones, Internet of Things devices and edge devices and thus can have substantially different processing capabilities. Secondly, there is the issue of the heterogeneity in client devices' data, which often are significantly non-independent or identically distributed (non-IID). As such, current efforts have primarily focused on alleviating the impact of system and data heterogeneity on FL, leaving other important challenges of FL deployment unaddressed.

Existing work on FL has been widely focused on scenarios where client data (i.e. data items located on a client device) are readily available for training, *i.e.* the data distribution is known upfront and the whole dataset can be stored in the memory of the client device. In real-world deployments, however, the data are more likely to be generated on-the-fly, the data distributions can change with time, and the client device has limited memory capacity. These aspects have been partially addressed only very recently in an oversimplified setting, which does not take into account the memory constraints of mobile devices and the upstream communication cost.

Furthermore, upcoming ML architectures, such as Transformers, have recently paved the way in applications such as computer vision, speech recognition, robotic control, and natural language processing. Nonetheless, such models intrinsically have significantly larger memory demands during training. This fact either prevents or hinders memory-constrained client devices to perform local training, which in turn prevents the deployment of Transformer models in FL setups.

The present applicant has therefore identified the need for an improved federated learning process that can be implemented across resource-constrained devices.

### Summary

In a first approach of the present techniques, there is provided a computer-implemented method for adaptable federated learning, FL, of a global machine learning, ML, model, at a client device, the method comprising: receiving, from a server, instructions to begin a FL round; determining a mode to use during the FL round, wherein the mode is one of a streaming mode involving sub-epoch training and a non-streaming mode involving epoch training; performing, using the determined mode, training of a local ML model stored at the client device, the local ML model corresponding to the global ML model; and transmitting a plurality of updated parameters of the local ML model to the server when the training is complete.

In other words, the present techniques enable a client device to determine a mode to use when performing local training of a locally-stored copy of the global ML model during a federated learning, FL, process. This is advantageous because client devices have different hardware capabilities and memory-constrained client devices may find it difficult or impossible to perform local training of ML models that are computationally-expensive to train, such as those based on Transformers. It is useful to include as many client devices as possible in an FL process, to reduce training biases. Furthermore, client devices need to transmit parameters of their locally-updated ML model to a server for aggregation into the global ML model, but this relies on having a good communication connection, such as a stable WiFi or mobile/cellular network connection and a high bandwidth connection. For unstable connections and/or low bandwidth connections, it becomes much more difficult for client devices to transmit the parameters to the server, especially when a size of data to be transmitted to the server is large.

Advantageously, the present techniques enable a client device to choose whether to operate in a streaming mode or a non-streaming mode when performing a FL round. That is, the present techniques, also referred to herein as "StreamingFL" enable client devices to stream their local updates to the server as soon as they become available. The streaming mode is a mode in which the client device performs incremental local training of the local ML model, and incremental transmission of updated model parameters, based on when the client device has data items available for training, the memory available for training, and a quality of the communication connection. An epoch in the training of an ML model is when a whole training dataset is used for training of the ML model. In other words, one entire pass of training data through the ML model is an epoch. The server may specify a required number of data items to be used in an epoch, i.e. a target batch size (i.e. a target number of data items to be used during each FL round). That is, during an FL round, the server may specify how many epoch updates are to be performed, and how many data items need to be used during each epoch update. In the streaming mode, rather than waiting to obtain the required number of data items to train the ML model, the client device passes the data items it already has (actual batch size) through the ML model. Thus, the streaming mode involves sub-epoch updates, i.e. updates which occur using less than the required number of data items for an epoch update. The parameters of the updated ML model are shared with the server at the end of each sub-epoch. In contrast, the non-streaming mode is a mode in which the client device performs epoch updates only. That is, in the non-streaming mode, the client device waits until it has obtained the required number of data items to train the ML model, and then passes the obtained data items through the ML model. The parameters of the updated ML model are shared with the server at the end of the epoch.

Advantageously, the present techniques also enable a client device to use a different mode when conditions change (e.g. rate of arrival of new data items for training, memory availability, and/or quality of communication connection), when starting another FL round. That is, the client device re-assesses conditions at the start of another FL round and may switch to a different mode or use the same mode as per the previous FL round.

The method may further comprise: receiving, from the server, current parameters for a local ML model at the start of the FL round, wherein the current parameters are obtained from a global ML model; and modifying the local ML model using the received current parameters. In other words, at the start of an FL round, the client device receives the current parameters of a local ML model to be trained. The current parameters may be generated, at the server, by conducting an aggregation of the local ML models from client devices that participated in the previous FL round. (Aggregation is generally the final step of an FL round). In this way, the client device trains the most up-to-date version of the local ML model during each FL round.

Determining a mode to use, i.e. streaming or non-streaming, during the FL round may be based on a current communication network speed of the client device and a size of the local ML model (where "size of the local ML model" means the total number of parameters of the model). That is, as mentioned above, a quality of the communication network/connection is used to determine whether to use a streaming mode or non-streaming mode. A streaming mode may be used when the communication network speed is currently high. This means that a client device would still perform training of the local ML model, but using fewer data items than required for a full epoch, and transmit the updated parameters to the server more often. This is because in the streaming mode, the client device does not need to wait to obtain all of the training data items needed for a full epoch. Instead, the client device performs sub-epoch updates with currently available training data items and rapidly transmits the updated parameters to the server after each sub-epoch update. The computational inefficiency *(i.e.* reduced amount of computation per communication round compared to a full-epoch approach) is balanced by the reduction in pressure on the hardware resources of the client device *(i.e.* shorter time occupying the processor of the client device).

Receiving instructions to begin a FL round may comprise receiving a predefined FL round duration and a predefined minimum number *β* of model updates to be performed in the FL round duration. That is, the server may specify how many epochs (also referred to as updates) are to be performed in each FL round. The server may also specify a number of data items that need to be included in each epoch.

Determining a mode to use during the FL round may comprise: determining a number *p* of updates that the client device is able to perform during the FL round; comparing the received predefined minimum number *β* of model updates to be performed with the determined number of updates *p*; and determining the streaming mode is to be used when the received predefined minimum number *β* of model updates to be performed is less than the determined number of updates *p* the client device is able to perform. Thus, the client device compares what is required by the server with what the client device is able to perform, given a number of factors.

Specifically, determining a number *p* of updates that the client device is able to perform during the FL round may be based on: an arrival rate of data items at the client device, where the data items are for training the local ML model; the predefined FL round duration; and a batch size of a batch of data items for training the local ML model. How these factors may be used to determine the number of updates that the client device is able to perform is explained in more detail below with respect to the Figures.

The method may comprise determining the batch size based on an available memory of the client device for the training of the local ML model and the size of the local ML model. Thus, the hardware capabilities of the client device are taken into consideration when determining the batch size. If a client device has lots of memory available because, for example, it is not resource-constrained or because memory is not being utilised presently, then the batch size may be larger. The client device may choose when to perform the FL round, to ensure there is sufficient memory available. For example, if the client device is a smartphone, the client device may perform the FL round when the smartphone is being charged or when the device is in a 'do not disturb' state (as may be the case when a user of the device is asleep).

Some example scenarios are now described to illustrate when a streaming mode or non-streaming mode may be used.

The method may comprise determining that the streaming mode is to be used when: the size of the local ML model is equal to a predefined size *m*; the current communication network speed is determined to be equal to a threshold speed; and the received predefined minimum number *β* of model updates to be performed is less than the determined number of updates *p*. Thus, when a bandwidth or speed is good, and the model is not especially large, a streaming mode is used. If the final condition is not satisfied, i.e. that *β* is not less than *p*, then a non-streaming mode is used.

Alternatively, the method may comprise determining that the streaming mode is to be used when: the size of the local ML model is greater than a predefined size *m* multiplied by a scaling factor *y*; the current communication network speed is determined to be equal to a threshold speed; and the received predefined minimum number *β* of model updates to be performed is less than the determined number of updates *p* divided by the scaling factor *y*. Thus, when a bandwidth or speed is good, but the model is large (i.e. bigger than some threshold size), a streaming mode is used. If the final condition is not satisfied, i.e. that *β* is not less than *p*/*y,* then a non-streaming mode is used. Here, the threshold size may be determined by the server by considering hardware capabilities (e.g. computation and memory) of client devices that participate in the federated learning process, so that the threshold size of the model is suitable for execution and training by most or all of the participating client devices. The threshold size may also be determined by the bandwidth of the communication networks used by the participating client devices. The threshold size may evolve over time, as the hardware capabilities and bandwidth may change over time.

Alternatively, the method may comprise determining that the streaming mode is to be used when: the size of the local ML model is equal to a predefined size *m*; the current communication network speed is determined to be less than a threshold speed multiplied by a scaling factor *x*; and the received predefined minimum number *β* of model updates to be performed is less than the determined number of updates *p* divided by the scaling factor *x*. Thus, when a bandwidth or speed is poor, and the model is not especially large, a streaming mode is used. If the final condition is not satisfied, i.e. that *β* is notless than *p*/*x,* then a non-streaming mode is used.

Alternatively, the method may comprise determining that the streaming mode is to be used when:the size of the local ML model is greater than a predefined size *m* multiplied by a scaling factor *y*; the current communication network speed is determined to be less than a threshold speed multiplied by a scaling factor *x*; and the received predefined minimum number *β* of model updates to be performed is less than the determined number of updates *p* divided by *y*/*x*. Thus, when a bandwidth or speed is poor, and the model is large (i.e. bigger than some threshold size), a streaming mode is used. If the final condition is not satisfied, i.e. that *β* is not less than *pl(y*/*x),* then a non-streaming mode is used.

The non-streaming mode is most likely to be used when the current communication network speed is low, but may also be used when the speed is high but the model is larger than the threshold size. The non-streaming mode is unlikely to be used when the current communication network speed is high and the model size is equal to the threshold size.

In cases where the non-streaming mode is used, the step of transmitting a plurality of updated parameters of the local ML model to the server may comprise selecting a subset of the plurality of updated parameters and compressing the selected subset prior to the transmitting. That is, the client device may only send some of the updated parameters to the server to avoid increasing the size of the data to be transmitted while the communication network speed is low.

The method may further comprise: capturing data items for use when training the local ML model during the FL round. The data items may be captured at the arrival rate mentioned above. That is, the client device may actively capture data items for use during the present FL round. If the arrival/capture rate changes, then the updates of the local ML model may be performed at a different frequency too. The data items may be of any type, and depend on the tasks of the local and global ML models. In one example, the global ML model and local ML model are for visual perception tasks, and capturing data items may comprise capturing images or frames of videos. The data items may include some data items that are similar to data items seen by the global ML model during pre-training of the global ML model (prior to the federated learning), and some data items that are different to those seen by the global ML model during pre-training. The visual perception tasks may be object detection, object recognition, object tracking, image denoising, image segmentation, image classification, image super-resolution, and so on. It will be understood that this is a non-limiting and non-exhaustive list of example tasks.

In a second approach of the present techniques, there is provided a client device for adaptable federated learning, FL, of a global machine learning, ML, model, the client device comprising: at least one processor coupled to memory for: receiving, from a server, instructions to begin a FL round; determining a mode to use during the FL round, wherein the mode is a streaming mode or a non-streaming mode; performing, using the determined mode, training of a local ML model stored at the client device, which corresponds to the global ML model; and transmitting a plurality of updated parameters of the local ML model to the server when the training is complete.

The client device may be a constrained-resource device, but which has the minimum hardware capabilities to use a trained neural network/ML model and to participate in federated learning. The client device may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge or vacuum cleaner). It will be understood that this is a non-exhaustive and non-limiting list of example client devices.

The features described above with respect to the first approach apply equally to the second approach and therefore, for the sake of conciseness, are not repeated.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to highlevel compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU). The one or a plurality of processors control the processing of the input data in accordance with a predefined operating rule or artificial intelligence (Al) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

### Brief description of the drawings

Implementations of the present techniques will now be described, by way of example only, with reference to the accompanying drawings, in which:
Figure 1 is a schematic diagram illustrating a system for federated learning, FL, referred to herein as "StreamingFL";
Figure 2 shows results of experiments to determine the reduced memory cost of training with small batch sizes;
Figure 3 shows results of experiments to determine the challenges in training with reduced batches;
Figure 4 is a schematic diagram showing a system for federated learning, the system comprising a server and at least one client device;
Figure 5 is a schematic diagram of a system for federated learning using streaming and non-streaming updates;
Figure 6 depicts an example in which the networking speed fluctuates over a period of time;
Figure 7 depicts an example in which the memory budget changes over a period of time;
Figure 8 shows the StreamingFL Algorithm;
Figure 9 is a schematic diagram showing a client device;
Figure 10 shows the results of experiments using ImageNet-1K to ImageNet-21K incremental learning datasets;
Figure 11 is a schematic diagram showing how the present techniques may be used for visual recognition tasks on edge devices;
Figure 12 is a flowchart of example steps to perform adaptable federated learning; and
Figure 13 is a block diagram of a system for performing adaptable federated learning.

### Detailed description of the drawings

Broadly speaking, embodiments of the present techniques provide a method for performing federated learning, which is suitable for implementation by resource-constrained devices, such as smartphones and edge devices.

As noted above, federated learning, FL, has become a popular area of research in recent years thanks to its privacy-preserving nature and capability to utilise the compute power of millions of user devices for the training of ML models. Nonetheless, the majority of existing systems have failed to consider jointly the following aspects when deploying FL in real-world applications:
1. **Progressive availability of data on clients.** Data are generated in small batches rather than being available altogether upfront. The speed of data generation may be different on each client.
2. **Spatial and temporal data heterogeneity.** Intra-client data experience distribution shifts as real-world events unfold in time. So far, traditional FL settings have focused on data heterogeneity in the spatial domain, i.e. inter-client data having different distributions. However, data heterogeneity in the temporal domain is also important. In this context, the capability to perform incremental learning is crucial for the successful deployment of FL.
3. **Memory-efficient training of emerging model architectures.** Upcoming ML architectures, such as Transformers, have recently paved the way in applications such as computer vision, speech recognition, robotic control, and natural language processing. Nonetheless, they intrinsically have significantly larger memory demands during training. This fact either prohibits or hinders memory-constrained client devices to perform local training, which in turn prevents the deployment of Transformer models in FL setups.

In this context, the present techniques provide "StreamingFL", a novel FL approach that takes into account and alleviates the impact of the aforementioned practical aspects that have been overlooked by existing work on FL deployment.

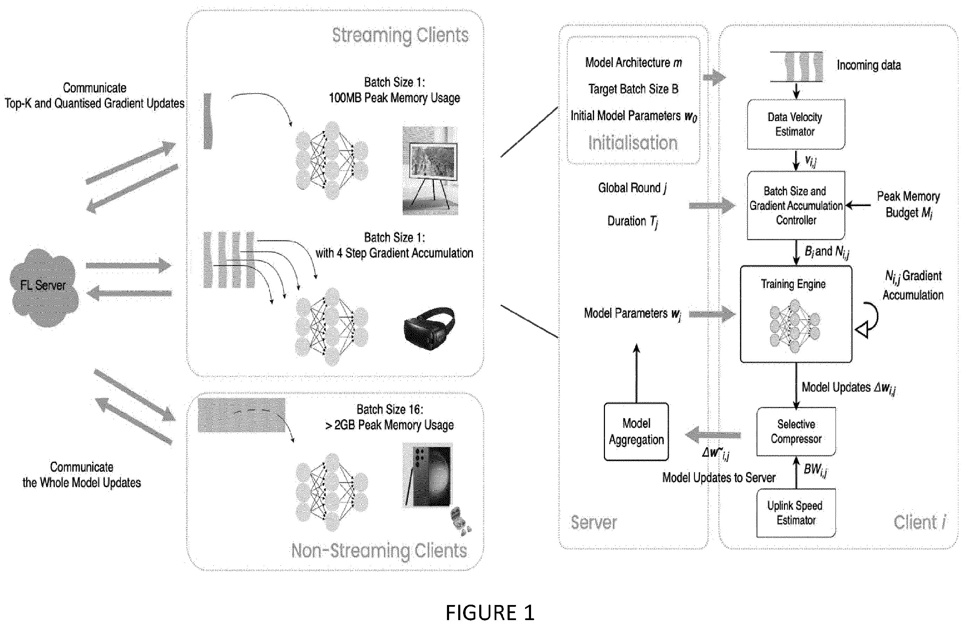

Figure 1 is a schematic diagram illustrating a system for federated learning, FL, referred to herein as "StreamingFL". The system takes into account practical aspects that have been overlooked by existing deployments of FL, *i.e.* progressively available data on client devices, spatial and temporal data heterogeneity, and memory-efficient training of upcoming models, such as Transformers, in incremental settings, *i.e.* training data distribution changes over time.

The present techniques comprise three components: i) streaming **sub-epoch updates,** which allow each client device to rapidly transmit updates when the uplink bandwidth is abundant, *ii)* **memory-aware batching & data velocity-adaptive gradient accumulation (GA)** that enable each client device to tune its batch size based on its memory budget and to match the number of the GA steps to the data generation speed that the client device experiences on the current round - these two methods combined enable the on-device training of memorycostly models without degrading the achieved accuracy, and *iii)* **networking-aware switching between streaming and non-streaming modes,** which allows each client device to dynamically balance its computation-to-communication ratio based on the quality of its uplink channel. The term "uplink bandwidth" is used herein to mean the bandwidth of the network used by the client device to communicate with the server (i.e. from client device to server). The term "data velocity" is used herein to mean is the rate of data item generation by the client device in terms of samples per second (samples/s). The client device may generate data items by taking readings from a sensor or capturing images from a camera, for example.

Experiments show that StreamingFL is able to achieve 70% validation accuracy with ViT-base on ImageNet with 40% of the data required by baselines such as standard FL, while enabling the federated training of memory-heavy emerging models, such as Vision Transformers (ViT-base), on ubiquitous memory-constrained devices.

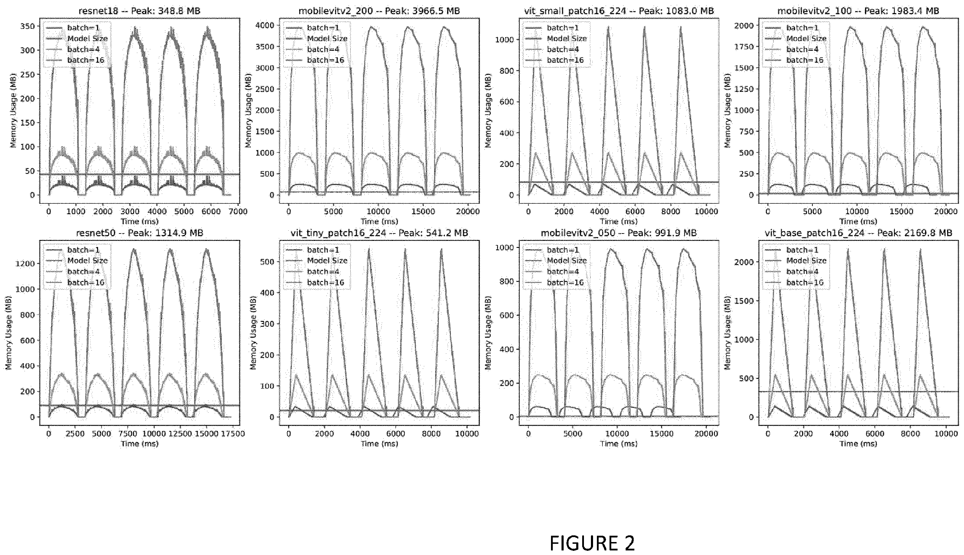

Figure 2 shows results of experiments to determine the reduced memory cost of training with small batch sizes. The actual memory usage is measured during training of various models, and model size (in red) and activation memory is compared for different batch sizes. It can be seen that standard batch sizes (*e.g*. 16) lead to excessive memory footprint for activations, exceeding the model size memory by up to 26x for ViT models (ViT-tiny) and 228x for CNN-based models (MobileNetV2_050). Smaller batch sizes (*e.g*. 1 or 2) significantly reduce peak memory consumption, enabling memory-constrained devices to participate in the FL process.

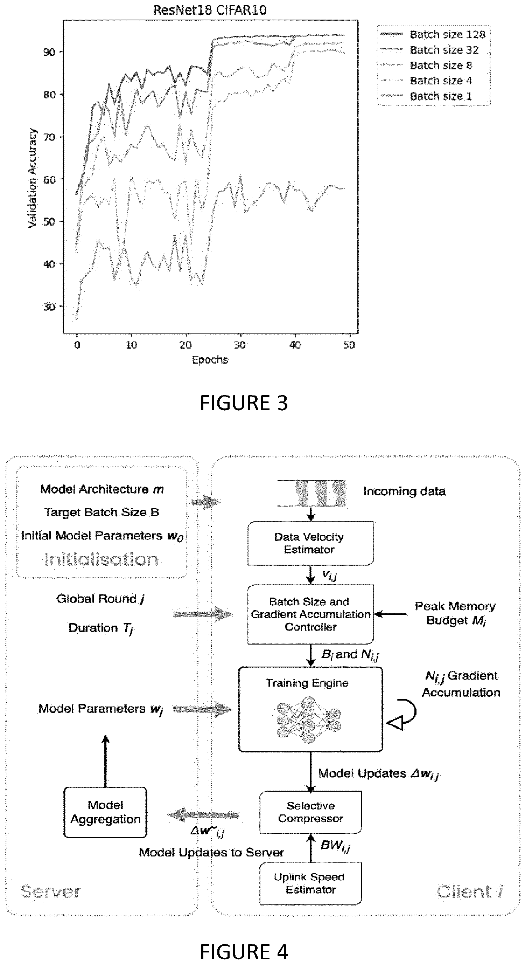

Figure 3 shows results of experiments to determine the challenges in training with reduced batches. It can be seen that, despite the memory savings, small batches degrade either final accuracy or convergence (time-to-accuracy). To analyse the impact of using small batches, a centralized training of ResNet18 is run on the CIFAR10 dataset with various batch sizes {128, 32, 8, 4, 1}. The experiments show significant drop in terms of accuracy, *i.e.* -30%, as the batch size decreases. In StreamingFL, this gap is bridged through the *Memory-Aware Batching* and *Data Velocity-Adaptive Gradient Accumulation* methods, which enable the utilisation of small batch sizes for memory savings without severely decreasing the attainable accuracy.

The StreamingFL System is now described with reference to Figure 4. Figure 4 is a schematic diagram showing a system for federated learning, the system comprising a server and at least one client device.

**Sub-Epoch Updates:** Traditional FL methods assume that each client processes their whole dataset at least once *(i.e.* going through at least one epoch) before sending an update to the server. Departing from this scheme, client devices using "StreamingFL" forward their local updates to a server (which stores the global model) as soon as enough samples become available for training the local models stored on the client devices, instead of waiting for the completion of an entire epoch. This process establishes a continuous flow of updates that allows for the timely tracking of data distribution shifts and enables the global model to adapt to the new data efficiently in terms of the number of samples used.

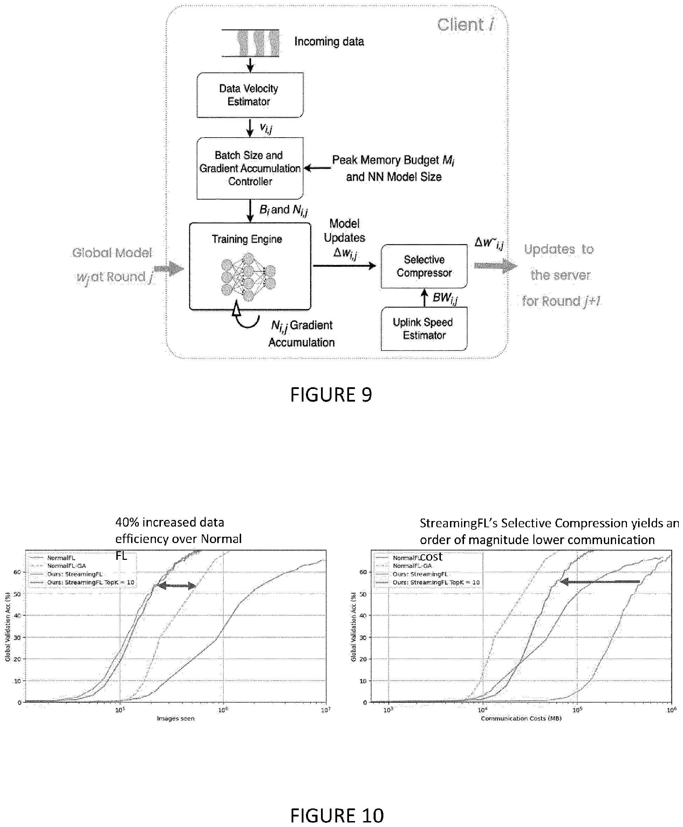

**Memory-Aware Batching and Data Velocity-Adaptive Gradient Accumulation:** At the beginning of an FL round *j*, a client device receives the current global model from the server and performs an update on model weights using the incoming data samples arrived during time interval *T*, which is an agreed round duration across all participating clients. (Each client device receives all of the updated parameters of the global model. As explained in more detail below, when a communication network bandwidth is high, each client device may transmit all of the updated parameters of the local ML model, i.e. the differences between the parameters of the local ML model before and after local training. Alternatively, when a communication network bandwidth is low/poor, each client device may use uplink compression and only transmit the Top-K parameter updates with the largest difference before and after local training). A StreamingFL client device *i* determines the local batch size *Bᵢ* based on the available memory budget *Mᵢ* and the model size. The number of gradient accumulation steps *N_{i,j}* is adaptively derived based on the arrival rate *v_{i,j}* of the incoming samples, i.e. *N_{i,j}* = *v_{i,j} · T*/*Bᵢ.* The intuition behind the *adaptive gradient accumulation* scheme is that when data arrive slowly (small *v_{i,j}*)*,* the client performs prompt updates with the available data during the time budget for current round *t*, instead of waiting to receive an entire epoch of data as in conventional FL settings, preventing straggler cases due to slowly arriving data. Conversely, when the data velocity *v_{i,j}* is high, the client will incorporate as many steps of gradients as possible to send to the server. As shown in the experimental results (see Figure 10), StreamingFL enables the use of upcoming, but memory-heavy, models, such as Transformers, on memory-constrained client devices, while simultaneously achieving data-efficient training compared to non-streaming FL baselines.

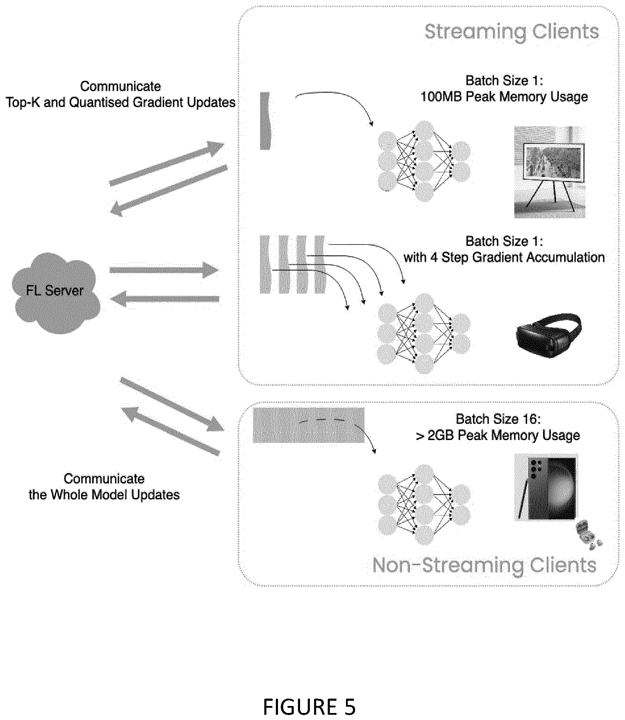

Figure 5 is a schematic diagram of a system for federated learning using streaming and non-streaming updates.

**Hybrid Streaming and Non-Streaming Updates & Selective Compression:** Frequent communication of updates enables data-efficient training, but at the same time it introduces communication overhead. To alleviate this, StreamingFL clients switch between streaming (*i.e.* more frequent, sub-epoch updates) and non-streaming (*i.e.* less frequent, full-epoch updates) modes, based on *1)* the quality of the client's networking conditions as well as 2) the model size. This operation is explained in more detail below. Similarly, the model updates transferred upstream are selectively compressed via the *Selective Compressor* module (see Figure 4), which communicates only the Top-K percent of the updates based on the client's networking conditions. That is, the Top-K percent of the updates are those parameters which have the most impact on the global ML model, i.e. the parameters of the local ML model which have changed the most before and after local training during the sub-epoch or epoch updates.

Example cases for Hybrid Streaming and Non-Streaming Updates, considering networking speed and model size, are now described. Note that in the streaming mode, **sub-epoch updates** are being used. Parameter *β* is set by the system operator and captures the mini**mum number of model updates per time interval** (e.g. minimum updates per second for each client) in the streaming mode. The following four examples are used to detail how StreamingFL's hybrid streaming and non-streaming modes work, given different values of *β*:
1. **High networking speed *BW* and small NN model size m:** If *β* < *p,* streaming mode with *p* updates per time interval, else non-streaming. This is the most common case where streaming is used. *Selective Compression* is typically not needed.
2. **High networking speed *BW*** and **large NN model size y*m**: If *β* < *p*/*y,* streaming mode with p/y updates per time interval, else non-streaming. Streaming mode is mostly used in this case, unless the NN model size is excessively large. *Selective Compression* can often alleviate the large NN model size and again enable streaming.
3. **Slow networking speed *BW*/*x* and small NN model size *m*:** If *β* < *p*/*x,* streaming mode with *plx* updates per time interval, else non-streaming. Due to the small NN model size, streaming mode is mostly used. *Selective Compression* can sometimes be used if the networking speed is severely limited.
4. **Slow networking speed *BW*/*x* and large NN model size *y*m*:** if ***β*<** *p*/*y*/*x,* streaming mode with *p*/*y*/*x* updates per time interval, else non-streaming. Non-streaming mode is typically used.

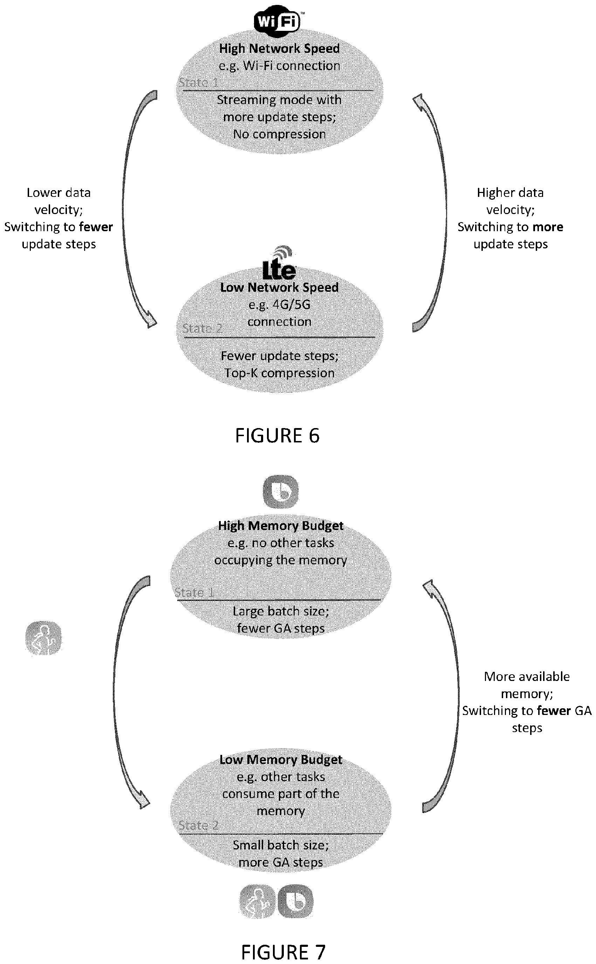

Referring to Figure 6, in a real-world deployment, the user can experience dynamic network conditions and memory budget. StreamingFL is designed to be able to cope with such changes efficiently, and thereby improve user experience of their devices in at least two ways. Firstly, client devices perform FL with existing hardware usage in mind, so that, for example, if a user is using the client device to make a video call, or stream and watch a movie, their experience is not negatively impacted. Secondly, client devices that participate in FL have models which are better personalized for the user, because they have been further trained using data items collected in the user's environment, and therefore, perform better for the user.

Figure 6 depicts an example in which the **networking speed** fluctuates over a period of time. StreamingFL adjusts to these changes as follows. Starting from State 1, where the user has good Wi-Fi connection for both uplink and downlink transfers, the StreamingFL client detects that the effective data velocity *v*_{*i,*j} is high. Hence, it performs more local optimisation steps (small *t_{i,j}*), and the clients do not perform compression when sending their model updates to the server. When the user moves from one room to another in their home/office or when an excessive number of devices share the Wi-Fi bandwidth, the Wi-Fi signal strength either drops substantially or its speed gets throttled. In such instances, the user's device typically falls back to 4G/5G connectivity, which leads to significantly lower speed. In such a scenario, StreamingFL will fall back to a large *t_{i,j}, i.e.* less frequent model optimisation, operating in State 2. As the uplink signal weakens and the throughput drops, the StreamingFL client will start to compress its model updates before transmitting them to the server. When the Wi-Fi connectivity is restored, the client will switch back to State 1, in which they perform frequent local optimisation steps and no compression.

A similar scenario is when the server adjusts its speed of transmission. In this case, the effective data velocity will also change and it will lead to all clients adjusting their frequency of updates. However, the differences are i) that the server can switch to non-streaming mode for all clients, and *ii)* as long as the clients-to-server uplink connection remains the same, the clients will not perform compression, so that the model updates can still be incorporated in the global model in the most rapid fashion possible.

Figure 7 depicts an example in which the **memory budget** changes over a period of time. In this case, the user participates in a workout session using Samsung Health APP on their phone, while a StreamingFL client is running a training session for Bixby automatic speech recognition (ASR). While other system attributes remain constant, the StreamingFL client adapts to the changes in the following manner. Starting from State 1, where the StreamingFL client has access to all the available memory of the target computing unit, it is able to perform single-step updates with larger batch sizes. Given the target batch size *B* is fixed, the client performs a small number of GA steps. The user starts their workout session using the Samsung Health APP to track their activity, which uses a visual recognition neural network model that performs its inference on the same computing unit as the StreamingFL client training of the Bixby ASR model. The available compute memory for the StreamingFL training session decreases significantly. As a result, StreamingFL will switch to smaller batch sizes and start to accumulate more gradient steps per update. Once the user finishes their workout session, the StreamingFL client regains exclusive access to the available memory, and switches back to State 1, where it performs large batch size training and fewer GA steps.

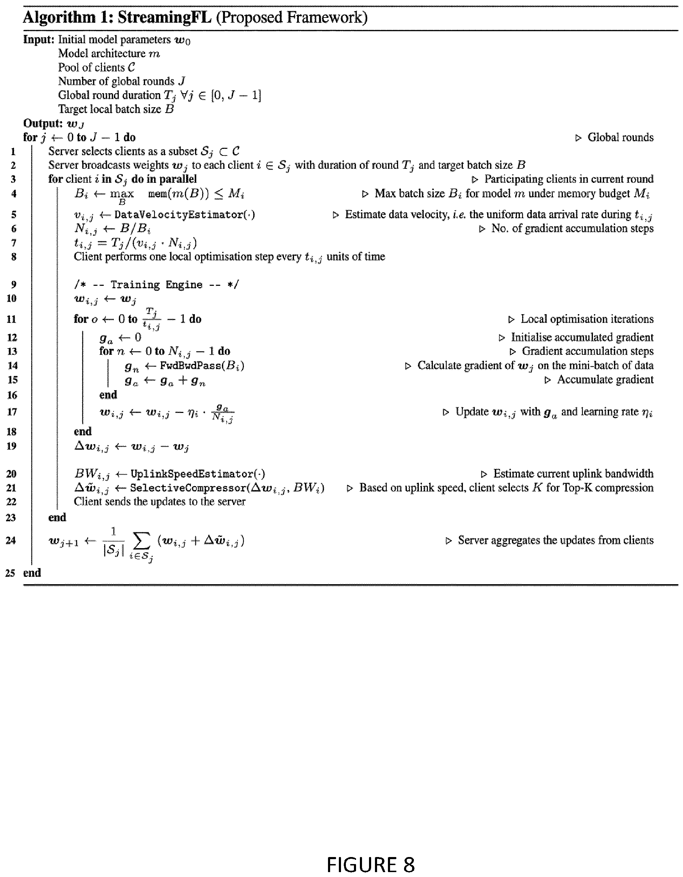

Figure 8 shows the StreamingFL Algorithm. Referring to Figure 8 and the client device in Figure 9, the processing flow of StreamingFL clients is now described. Prior to deployment, the server sets the input parameters Tj and B which are the timeout of the j-th global round and the target local batch size, respectively. Parameter B determines the minimum amount of data that need to be processed locally, before a client transmits an update back to the server.

Upon deployment, incoming data samples are continuously received in the input queue of each participating client (top of Figure 9). First, the *Data Velocity Estimator* maintains a running estimate *v_{i,j}* of the arrival rate in samples/s (line 5 of the Algorithm in Figure 8). Next, the *Batch Size and Gradient Accumulation (GA) Controller* sets the batch size *Bᵢ* based on the target global target batch size B, the model *m* and the memory budget of the *i*-th client device *Mᵢ* (line 4).

The *Controller further* sets the number of GA steps *N_{i,j}* by considering *B* and *Bᵢ*. Parameters *Bᵢ* and *N_{i,j}* are used to configure the *Training Engine.*

Next, the *Training Engine* performs *Tⱼ*/*t_{i,j}* local updates (lines 11-18), using *N_{i,j}* GA steps and a batch size of *Bᵢ* for each step. The final model updates Δ*w_{i,j}* (line 19) are selectively compressed by the *Selective Compressor* based on the uplink networking speed *BW_{i,j},* which is estimated by the *Uplink Speed Estimator.* The data velocity and uplink speed estimations occur once per global round, under the assumption that they do not change radically in the round's duration.

The final version of the model updates *Δw̃_{i,j}* (line 21) are sent back to the server for the model aggregation step (line 24).

### Results.

Figure 10 shows the results of experiments using ImageNet-1K to ImageNet-21K incremental learning datasets. For the empirical evaluation, StreamingFL was implemented using PyTorch and integrated it into the Flower framework as described in Beutel, Daniel J., Taner Topal, Akhil Mathur, Xinchi Qiu, Javier Fernandez-Marques, Yan Gao, Lorenzo Sani et al. "Flower: A friendly federated learning research framework." arXiv preprint arXiv:2007.14390 (2020). To emulate real-world settings, a method to produce novel datasets for federated *incremental* learning is emulated as follows.

Dataset Synthesis and Partitioning: All classes in ImageNet-21K (Deng, J., Dong, W., Socher, R., Li, L.J., Li, K., Fei-Fei, L.: ImageNet: A Large-Scale Hierarchical Image Database. In: CVPR (2009) are ranked based on their semantic distances (in WordNet) to all ImageNet-1K labels. The 1000 most dissimilar classes are selected, and the dataset is partitioned among 1000 client devices. This step is performed following Latent Dirichlet Allocation (LDA) partitioning with parameter *alpha* controlling the non-IID-ness, where lower values of *alpha* imply higher data heterogeneity. That is, the dataset is designed to simulate the fact that client devices' data are different from each other in reality. Furthermore, for different simulations, it is desirable to have different levels of dissimilarity among the client devices' data. The way this is done is to partition the ImageNet-21K based on LDA, so that images of different classes (e.g. cats, dogs) are partitioned with a tunable level of heterogeneity (one client might have more cats and the other more dogs), where this level is determined by a parameter alpha (in one setting client A and client B both have cats and dogs → high alpha / low heterogeneity; versus a setting where client A has only cats and B only dogs → low alpha / high heterogeneity. The latter ensures the simulations are much more reflective of the real-world differences in data of client devices).

Baselines: The performances of StreamingFL are compared to three baselines: i) Normal FL, which represents the widely used FedAvg method, *ii)* Normal FL with Gradient Accumulation (GA), and *iii)* StreamingFL with TopK, an enhanced variant of StreamingFL where each client transmits only Top-K percent of its model updates to reduce the uplink communication cost.

FL Settings: During the evaluation, for each FL round, ten client devices are randomly sampled/chosen to participate in the training. The server transmits the updated global model to the participating client devices, and the client devices optimise their local model using an SGD optimiser with a learning rate of 0.01 using their local partition of data. Once the updates of model weights are transmitted to the server, the server will average these and update the global model for the following round. The simulated FL training lasts 2000 rounds in total.

Figure 10 shows the achieved accuracy under the same setup for all methods, *i.e.* batch size of 1, the ViT-Base architecture, LDA *alpha* = *0.1* for data partitioning across clients, and where applicable, each client accumulates the gradients over 32 GA steps. Specifically, Figure 10 shows validation accuracy of StreamingFL, StreamingFL with Top-K, Normal FL, and Normal FL with Gradient Accumulation (GA) on ImageNet21K-selected-1K dataset, with the most heterogeneous data partitioning (LDA *alpha*=0.1) across clients.

The left-hand graph in Figure 10 shows the achieved accuracy as a function of the images seen. It is observed that StreamingFL enables the same validation accuracy to be reached as Normal FL on ImageNet, while requiring around 40% of the data, when targeting ViT-Base. As a result, StreamingFL is able to provide more data-efficient federated learning and lead to faster adaptation to any data distribution changes, without the need for the clients to excessively wait for more data to become available.

The right-hand graph in Figure 10 shows the achieved accuracy as a function of the communication cost. While StreamingFL's regular flow of model updates from the clients induces additional communication cost, this graph demonstrates that by introducing the Top-K compression for the uplink client-to-server transmission of the model updates (*i.e*. StreamingFL TopK=10 in the figure), the communication overhead is significantly alleviated. Specifically, it leads to a reduction of 10x in the amount of transferred data, while maintaining the same level of accuracy, making StreamingFL a deployable approach.

Example uses of the present techniques are now described.

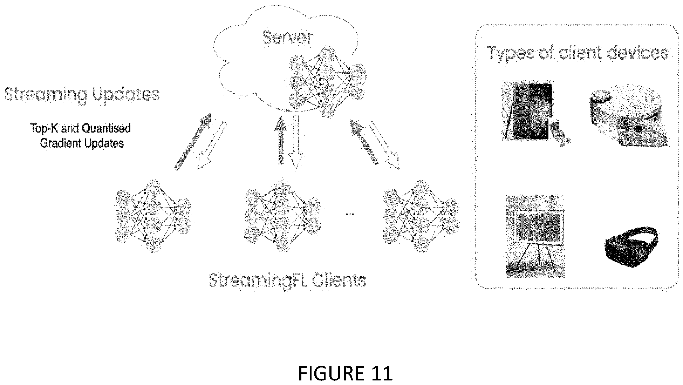

Figure 11 is a schematic diagram showing how the present techniques may be used for visual recognition tasks on edge devices. Edge devices, such as mobile phones, robot vacuum cleaners and AR glasses, often perform visual recognition tasks for specific applications on private user data. StreamingFL allows for learning useful updates from incoming data on users' edge devices without sharing private information to a cloud / remote server.

The memory capacity of such edge devices is usually limited. With recent state-of-the-art vision models, such as ViT-based architectures, consuming significantly more memory footprint (2x-10x) than CNNs, an excessive number of devices are excluded from the FL process due to out-of-memory issues. This in turn degrades the global model accuracy, as the data residing in memory-constrained devices are not seen during training.

StreamingFL enables training with small memory footprint by tailoring each client device's batch size to its memory capacity constraint. Moreover, by monitoring the speed of data generation on the user device, the StreamingFL client adapts to suitable gradient accumulation rate, leading to both effective learning and fast integration of new updates to the global model.

Another example use of the present techniques for visual recognition tasks on edge devices is described. Mobile devices are often connected wirelessly to local area networks, the bandwidth of which vary across devices and over time. StreamingFL allows the clients to switch between streaming and non-streaming mode based on network connectivity. As such, it either i) exploits the fast networking for data-efficient training through streaming updates or *ii)* it saves communication cost by performing more computation per upstream communication through the non-streaming mode.

Image data observed by edge devices often need to adapt to global trends and events such as a new social media (e.g. TikTok/lnstagram) trend or sudden events, such as a global pandemic. Overall, StreamingFL is able to promptly capture new global trends in the server updates and thereby achieve both timeliness (relevance) and data efficiency.

The present techniques may also be used to perform federated learning using consumer robotic devices. Mobile agents, such as vacuum cleaner or pet monitoring robots, typically operate in long cycles during which DNNs are used to identify and avoid obstacles, as well as interact with the user. As such, rapid (online) consumption of newly-generated training data (e.g. arising after a collision) and adaptation of the deployed DNN models is required after a failure, to avoid the repetition of predictive errors that have a direct impact on user-experience.

Additionally, with training datasets for robot applications being orders of magnitude smaller than other domains, sharing experience between robots in a privacy-preserving manner is a key technology to enable the creation of large-scale generalisable robot perception models.

Typically constrained by limited storage capacity, this adaptation needs to happen on-the-fly. Furthermore, as it is common for a large set of failures to occur during the initial "calibration" phase, where the robot's model is personalised to the user's environment, traditional approaches (model fine-tuning with large number of local iterations before aggregation) may lead to client drift degrading the accuracy of the global model.

The present techniques can remedy this issue, allowing for rapid adaptation of the local model while facilitating better alignment through continuous integration with the global model. Additionally, this enables a faster sharing of gained experience between devices, collectively leading to an improvement in user experience.

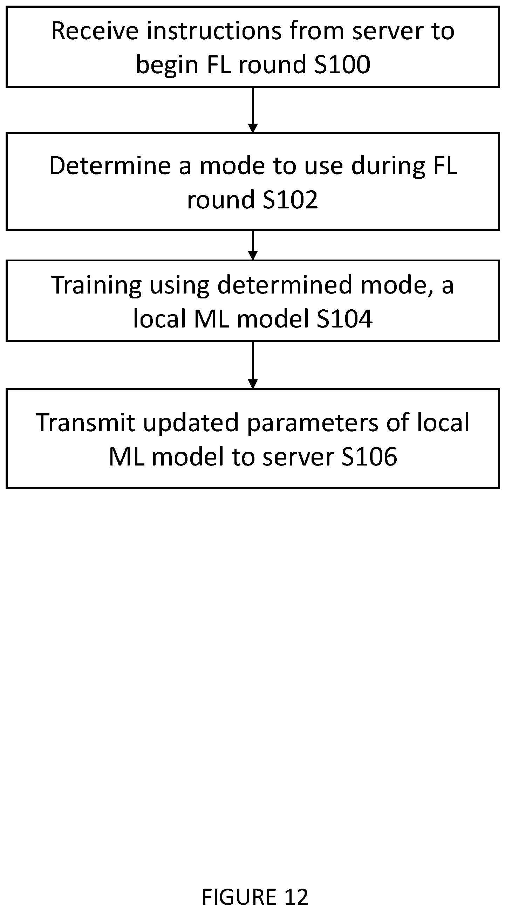

Figure 12 is a flowchart of example steps to perform adaptable federated learning of a global machine learning, ML, model, at a client device. The method comprises: receiving, from a server, instructions to begin a FL round (step S100); determining a mode to use during the FL round, wherein the mode is one of a streaming mode and a non-streaming mode (step S102); training, using the determined mode, a local ML model stored at the client device, the local ML model corresponding to the global ML model (step S104); and transmitting a plurality of updated parameters of the local ML model to the server when the training is complete (step S106).

At step S100, the method may further comprise: receiving, from the server, current parameters for a local ML model at the start of the FL round, wherein the current parameters are obtained from a global ML model; and modifying the local ML model using the received current parameters. In other words, at the start of an FL round, the client device receives the current parameters of a local ML model to be trained. The current parameters may be generated, at the server, by conducting an aggregation of the local ML models from client devices that participated in a previous FL round . In this way, the client device trains the most up-to-date version of the local ML model (i.e. the local version of the global ML model) during each FL round.

Receiving instructions to begin a FL round (step S100) may comprise receiving a predefined FL round duration and a predefined minimum number *β* of model updates to be performed in the FL round duration. That is, the server may specify how many epochs (also referred to as updates) are to be performed in each FL round. The server may also specify a number of data items that need to be included in each epoch.

Determining a mode to use during the FL round (step S102) may comprise using a current communication network speed of the client device and a size of the local ML model to determine whether to use the streaming mode or non-streaming mode. That is, as mentioned above, a quality of the communication network/connection is used to determine whether to use a streaming mode or non-streaming mode. A streaming mode may be used when the communication network speed is currently low, and/or the model size is large. This means that a client device would perform more training of the local ML model, but using fewer data items than required for a full epoch, and transmit the updated parameters to the server more often. The computational inefficiency is balanced by the reduction in pressure on the hardware resources of the client device, and a risk of failed transmissions is also reduced.

Determining a mode to use during the FL round (step S102) may comprise: determining a number *p* of updates that the client device is able to perform during the FL round; and comparing the received predefined minimum number *β* of model updates to be performed with the determined number of updates *p*. Thus, the client device compares what is required by the server with what the client device is able to perform, given a number of factors. Specifically, determining a number *p* of updates that the client device is able to perform during the FL round may comprise using: an arrival rate of data items at the client device; the predefined FL round duration; and a batch size of a batch of training data items for training the local ML model.

The method shown in Figure 12 may comprise determining the batch size using an available memory for the training of the local ML model and the size of the local ML model. Thus, the hardware capabilities of the client device are taken into consideration when determining the batch size. If a client device has lots of memory available because, for example, it is not resource-constrained or because memory is not being utilised presently, then the batch size may be larger. The client device may choose when to perform the FL round, to ensure there is sufficient memory available. For example, if the client device is a smartphone, the client device may perform the FL round when the smartphone is being charged or when the device is in a 'do not disturb' state (as may be the case when a user of the device is asleep).

In cases where the non-streaming mode is used, the step (S106) of transmitting a plurality of updated parameters of the local ML model to the server may comprise selecting a subset of the plurality of updated parameters and compressing the selected subset prior to the transmitting. That is, the client device may only send some of the updated parameters to the server to avoid increasing the size of the data to be transmitted while the communication network speed is low.

The method may further comprise: capturing data items for use when training the local ML model. That is, the client device may actively capture data items for use during the present FL round. The data items may be of any type, and depend on the tasks of the local and global ML models. In one example, the global ML model and local ML model are for object recognition tasks, and capturing data items may comprise capturing images or frames of videos. The data items may include some data items that are similar to data items seen by the global ML model during pre-training of the global ML model (prior to the federated learning), and some data items that are different to those seen by the global ML model during pre-training. The visual perception tasks may be object detection, object recognition, object tracking, image denoising, image segmentation, image classification, image super-resolution, and so on. It will be understood that this is a non-limiting and non-exhaustive list of example tasks.

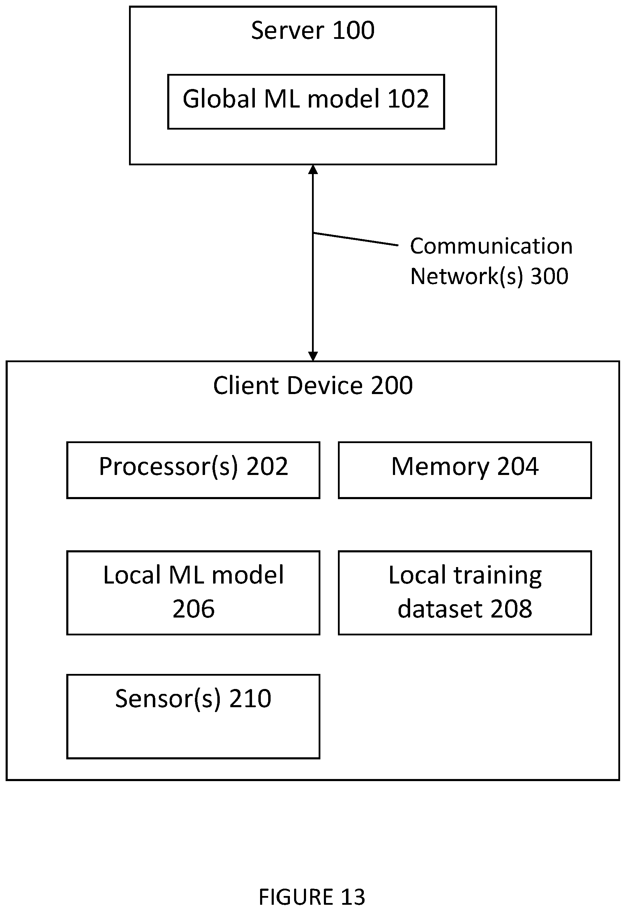

Figure 13 is a block diagram of a system for performing adaptable federated learning. The system comprises a server 100, which stores a global ML model for a specific task, such as object detection. The server 100 is able to communicate with a plurality of client devices.

The system comprises a plurality of client devices 200. Although only one client device 200 is shown in Figure 13 for the sake of simplicity, it will be understood that there may be tens, hundreds, thousands or hundreds of thousands of client devices 200 coupled to the same server 100.

The client devices 200 are connected to the server 100 via a communication network(s) 300. For example, the client devices 200 may be able to communicate with the server 100 via a cellular/mobile network or via WiFi, or both. It will be understood that the client devices 200 may switch which communication network 300 they use to communicate with the server 100. For example, if the client device 200 is a mobile electronic device (such as a smartphone), the client device 200 may connect to WiFi in some environments (e.g. a user's home or workplace) and may connect to a mobile network in other environments. In some cases, the WiFi signal strength may be poor and the client device 200 may actively choose to switch to using a mobile network to communicate with the server 100. Thus, changes in which communication network the client devices 200 are connected to may impact the mode used during a FL round.

Each client device 200 comprises at least one processor coupled to memory for: receiving, from a server, instructions to begin a FL round; determining a mode to use during the FL round, wherein the mode is a streaming mode or a non-streaming mode; performing, using the determined mode, training of a local ML model stored at the client device, which corresponds to the global ML model; and transmitting a plurality of updated parameters of the local ML model to the server when the training is complete.

Each client device 200 comprises at least one processor 202 coupled to memory 204. The at least one processor 202 may comprise one or more of: a microprocessor, a microcontroller, and an integrated circuit. The memory 204 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

Each client device 200 stores a local ML model 206, which corresponds to the global ML model 102 stored on the server 100. The local ML model 206 may be a copy of the global ML model 102, or may be a lightweight version of the global ML model 102 that is more suitable for use by resource-constrained devices.

Each client device 200 has a local training dataset 208. The local training dataset 208 comprises data items used to perform the local training of the local ML model 206. Each client device 200 comprises at least one sensor 210. The at least one sensor may be any sensor which is able to capture or collect data items that can be processed by the local ML model 206.

During an FL round (and otherwise), each client device 200 may actively capture data items for use during the present FL round, using the at least one sensor 210. The data items may be of any type, and depend on the tasks of the local and global ML models. In one example, the global ML model and local ML model are for visual perception tasks, and capturing data items may comprise capturing, using a camera 210, images or frames of videos.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for adaptable federated learning, FL, of a global machine learning, ML, model, at a client device, the method comprising:
receiving, from a server, instructions to begin a FL round;
determining a mode to use during the FL round, wherein the mode is one of a streaming mode involving sub-epoch training and a non-streaming mode involving epoch training;
training, using the determined mode, a local ML model stored at the client device, the local ML model corresponding to the global ML model; and
transmitting a plurality of updated parameters of the local ML model to the server when the training is complete.

2. The method as claimed in claim 1 further comprising:
receiving, from the server, current parameters for a local ML model at the start of the FL round, wherein the current parameters are obtained from a global ML model; and
modifying the local ML model using the received current parameters.

3. The method as claimed in claim 1 or 2 wherein determining a mode to use during the FL round is based on a current communication network speed of the client device and a size of the local ML model.

4. The method as claimed in claim 3 wherein receiving instructions to begin a FL round comprises receiving a predefined FL round duration and a predefined minimum number *β* of model updates to be performed in the FL round duration.

5. The method as claimed in claim 4 wherein determining a mode to use during the FL round comprises:
determining a number *p* of updates that the client device is able to perform during the FL round;
comparing the received predefined minimum number *β* of model updates to be performed with the determined number of updates *p*; and
determining the streaming mode is to be used when the received predefined minimum number *β* of model updates to be performed is less than the determined number of updates *p* the client device is able to perform.

6. The method as claimed in claim 5 wherein determining a number *p* of updates that the client device is able to perform during the FL round is based on:
an arrival rate of data items at the client device, wherein the data items are for training the local ML model;
the predefined FL round duration; and
a batch size of a batch of data items for training the local ML model.

7. The method as claimed in claim 6 further comprising determining the batch size based on an available memory of the client device for the training of the local ML model and the size of the local ML model.

8. The method as claimed in claim 5, 6 or 7 determining a mode to use during the FL round comprises determining the streaming mode is to be used when:
the size of the local ML model is equal to a predefined size m;
the current communication network speed is determined to be equal to a threshold speed; and
the received predefined minimum number *β* of model updates to be performed is less than the determined number of updates *p*.

9. The method as claimed in claim 5, 6 or 7 determining a mode to use during the FL round comprises determining the streaming mode is to be used when:
the size of the local ML model is greater than a predefined size m multiplied by a scaling factor y;
the current communication network speed is determined to be equal to a threshold speed; and
the received predefined minimum number *β* of model updates to be performed is less than the determined number of updates *p* divided by the scaling factor y.

10. The method as claimed in claim 5, 6 or 7 determining a mode to use during the FL round comprises determining the streaming mode is to be used when:
the size of the local ML model is equal to a predefined size m;
the current communication network speed is determined to be less than a threshold speed multiplied by a scaling factor x; and
the received predefined minimum number *β* of model updates to be performed is less than the determined number of updates *p* divided by the scaling factor x.

11. The method as claimed in claim 5, 6 or 7 determining a mode to use during the FL round comprises determining the streaming mode is to be used when:
the size of the local ML model is greater than a predefined size m multiplied by a scaling factor y;
the current communication network speed is determined to be less than a threshold speed multiplied by a scaling factor x; and
the received predefined minimum number *β* of model updates to be performed is less than the determined number of updates *p* divided by y/x.

12. The method as claimed in claim 10 or 11 wherein when the non-streaming mode is used, transmitting a plurality of updated parameters of the local ML model to the server comprises selecting a subset of the plurality of updated parameters and compressing the selected subset prior to the transmitting.

13. The method as claimed in any preceding claim further comprising:
capturing data items for use when training the local ML model during the FL round.

14. The method as claimed in claim 13 wherein the global ML model and local ML model are for visual perception tasks, and capturing data items comprises capturing images or frames of videos.

15. A client device for adaptable federated learning, FL, of a global machine learning, ML, model, the client device comprising:
at least one processor coupled to memory for:
receiving, from a server, instructions to begin a FL round;
determining a mode to use during the FL round, wherein the mode is one of a streaming mode involving sub-epoch training and a non-streaming mode involving epoch training;
training, using the determined mode, a local ML model stored at the client device, the local ML model corresponding to the global ML model; and
transmitting a plurality of updated parameters of the local ML model to the server when the training is complete.
